# EUROPÄISCHE PATENTSCHRIFT

(11) **EP 2 610 499 B1**
(45) Veröffentlichungstag und Bekanntmachung des Hinweises auf die Patenterteilung: **18.01.2017**
(21) Anmeldenummer: 11195806.2
(22) Anmeldetag: 27.12.2011
(51) Int. Cl.: F04D 13/06, F16C 27/02

(54) **Pumpenaggregat**
Pump power unit
Groupe motopompe

(43) Veröffentlichungstag der Anmeldung: 03.07.2013
(73) Patentinhaber: Grundfos Holding A/S, 8850 Bjerringbro (DK)
(72) Erfinder: Iversen, Kåre, 8870 Langå (DK)
(74) Vertreter: Patentanwälte Vollmann & Hemmer

(56) Entgegenhaltungen:
- DE-A1- 4 108 257
- DE-A1-102006 053 479
- DE-U1- 7 836 469
- GB-A- 866 678
- US-A- 3 960 418
- US-A- 4 944 611
- US-B1- 8 083 500

## Beschreibung

Die Erfindung betrifft ein Pumpenaggregat mit den im Oberbegriff des Anspruchs 1 angegebenen Merkmalen.

Bei Pumpenaggregaten mit einem als Spaltrohrmotor ausgebildeten elektrischen Antriebsmotor, wie beispielsweise Umwälzpumpenaggregaten für Heizungsanlagen, ist üblicherweise im Inneren eines Spaltrohrtopfes ein Lager angeordnet, in welchem ein Axialende einer Motorwelle in radialer Richtung gelagert ist. Zur Befestigung dieses Lagers ist es bekannt, an das axiale Ende des Spaltrohres einen Lagerhalter anzuschweißen, in welchem das Lager aufgenommen wird. Dieser Lagerhalter weist dann in der Regel einen kleineren Innendurchmesser als das angrenzende Spaltrohr auf. Dieser Aufbau des Spaltrohrs mit dem angeschweißten Lagerhalter ist relativ aufwändig.

DE 41 08 257 A1 zeigt eine Magnetkupplungspumpe mit einer Magnetkupplung, in welcher ein äußerer Magnetrotor von einem inneren Magnetrotor durch einen Spalttopf getrennt ist. Der innere Magnetrotor ist in seinem Inneren an einer Welle befestigt, welche in einem Lager gelagert ist, welches in einem sich konzentrisch zur Welle erstreckenden Vorsprung gelagert ist, wobei der Vorsprung sich vom offenen Ende des Spaltrohres in dieses hineinerstreckt. So ist die Lagerung im Inneren des inneren Magnetrotors gelegen.

DE 10 2006 053 479 A1 offenbart eine Motorkreiselpumpe mit einem als Spaltrohrmotor ausgebildeten elektrischen Antriebsmotor. Dabei ist das Spaltrohr so ausgebildet, dass es an seinem dem Laufrad abgewandten Axialende durch einen Blechformkörper verschlossen ist, welcher eine axiale Verlängerung des Spaltrohres mit kleinerem Durchmesser bildet, in welcher ein Lager für die Rotorwelle angeordnet ist. Das heißt, hier ist ein separates Bauteil zum Verschluss des Spaltrohres am axialen Ende vorgesehen.

US 4,944,611 offenbart ein abgedichtetes Kugellager, bei welchem ein äußerer Lagerring in einem druckgegossenen Gehäuse angeordnet ist, wobei der äußere Lagerring an den axialen Enden von einem Blechmantel umgeben ist, welcher zu starke Temperatureinflüsse von dem Lager beim Eingießen in das Gehäuse fernhält. Dieser Mantel kann gewellt ausgebildet sein.

Eine weitere Kugellageranordnung ist aus US 3,960,418 bekannt. Eine weitere Gleitlageranordnung ist aus DE 78 36 469 U1 bekannt.

Es ist Aufgabe der Erfindung, ein Pumpenaggregat mit einem Spaltrohrmotor dahingehend zu verbessern, dass ein Lager auf einfachere Weise an einem Spaltrohrtopf angeordnet werden kann, wobei gleichzeitig ein vereinfachter Aufbau des Spaltrohres möglich ist.

Diese Aufgabe wird gelöst durch ein Pumpenaggregat mit den in Anspruch 1 angegebenen Merkmalen. Bevorzugte Ausführungsformen ergeben sich aus den Unteransprüchen, der nachfolgenden Beschreibung sowie den beigefügten Figuren.

Das erfindungsgemäße Pumpenaggregat weist einen elektrischen Antriebsmotor auf, welcher in bekannter Weise als Spaltrohrmotor ausgebildet ist und mit der eigentlichen Pumpe eine Baueinheit bildet. Das Spaltrohr ist als Spaltrohrtopf ausgebildet, das heißt ein Axialende des Spaltrohres, nämlich das dem Laufrad der Pumpe abgewandte Axialende des Spaltrohres ist geschlossen ausgebildet. Ein solcher Spaltrohrtopf kann in bekannter Weise beispielsweise aus Metall, insbesondere aus rostfreiem Stahl gefertigt werden. Dabei kann der Spaltrohrtopf insbesondere als Tiefziehteil hergestellt werden. Im Inneren des Spaltrohrtopfes ist ein Lager zur Lagerung einer Motorwelle angeordnet. Dabei ist das Lager nahe dem geschlossenen Ende des Spaltrohrtopfes angeordnet. Das Lager weist einen Außendurchmesser auf, welcher kleiner als der Innendurchmesser des Spaltrohrtopfes ist. Das heißt, der Spaltrohrtopf ist in dem Bereich, in dem das Lager angeordnet ist, vorzugsweise nicht verjüngt ausgebildet.

Um das Lager, welches einen kleineren Außendurchmesser als der Innendurchmesser des Spaltrohrtopfes aufweist, dennoch in dem Spaltrohrtopf fixieren und lagern zu können, ist ein Lagerhalter vorgesehen, welcher den Freiraum zwischen Außendurchmesser des Lagers und Innendurchmesser des Spaltrohrtopfes füllt und das Lager zentriert im Spaltrohrtopf fixiert. Dazu weist der Lagerhalter mehrere sich quer zum Innenumfang des Spaltrohrs erstreckende Stege auf. Das heißt der Lagerhalter ist nicht als Vollmaterial ausgebildet. Die Stege sind vorzugsweise in Umfangsrichtung voneinander beabstandet und über den Umfang verteilt. Besonders bevorzugt sind die Stege dabei gleichmäßig über den Umfang verteilt, um Radialkräfte in allen Richtungen gleichmäßig von dem Lager auf den Spaltrohrtopf übertragen zu können. Der Lagerhalter ist vorzugsweise als separates Bauteil gefertigt, welches nach der Herstellung des Spaltrohrtopfes in diesen eingesetzt wird. Das Lager kann vor dem Einsetzen des Lagerhalters in den Spaltrohrtopf in dem Lagerhalter angeordnet werden, oder aber auch nach dem Einsetzen des Lagerhalters in den Spaltrohrtopf. Das Lager wird an seinem Innenumfang weiter bevorzugt nach dem Einsetzen in den Spaltrohrtopf geschliffen, um eine Zentrierung der Lagerflächen bezüglich des Innendurchmessers des Spaltrohrtopfes sicherzustellen.

Die Stege erstrecken sich quer zum Innenumfang des Spaltrohres, das heißt vorzugsweise im Wesentlichen radial zur Längsachse des Spaltrohrtopfes, das heißt zur Drehachse der Motorwelle. Die Stege und vorzugsweise der gesamte Lagerhalter können beispielsweise aus Kunststoff oder auch aus Metall ausgebildet sein.

Besonders bevorzugt sind die Stege aus einem Flachmaterial, insbesondere einem Blech ausgebildet, welches eine Wandstärke aufweist, die geringer ist als der radiale Abstand zwischen dem Außenumfang des Lagers und dem Innenumfang des Spaltrohres. Das heißt, dieses Flachmaterial erstreckt sich mit seinen Oberflächen quer, insbesondere radial zum Innenumfang des Spaltrohrtopfes bzw. zur Längsachse des Spaltrohrtopfes.

Bevorzugt können mehrere Stege einstückig von einem in Umfangsrichtung wellen- und/oder zickzackförmig verlaufend geformten Flachmaterial gebildet sein. Das heißt, dieses Flachmaterial ändert seine Erstreckungsrichtung immer so, dass Stege gebildet werden, welche sich quer oder insbesondere im Wesentlichen radial zum Innenumfang des Spaltrohrtopfes erstrecken. Dabei können sich die Stege, welche so gebildet werden, in Abschnitten auch im Winkel, insbesondere im spitzen Winkel zum Radius erstrecken. Die wellenförmige bzw. zickzackförmige Form kann insbesondere durch Umformen des Flachmaterials bzw. Bleches gefertigt werden. Der im Querschnitt zickzackförmige bzw. wellenförmige Verlauf erstreckt sich dabei vorzugsweise über den gesamten äußeren Umfang des Lagerhaltes und füllt den Freiraum zwischen dem Innenumfang des Spaltrohrtopfes und dem Außenumfang des Lagers aus. Dabei kommen die Scheitelpunkte bzw. Scheitelbereiche des wellen- bzw. zickzackförmigen Flachmaterials am Innenumfang des Spaltohrtopfes sowie am Außenumfang des Lagers zur Anlage und sorgen so für die radiale Fixierung des Lagers im Inneren des Spaltrohrtopfes und für die Kraftübertragung von dem Lager auf den Spaltrohrtopf in radialer Richtung.

Vorzugsweise erstreckt sich das Flachmaterial so über den gesamten Umfang, insbesondere als geschlossener Ring. Auf diese Weise wird das Lager über den gesamten Umfang radial im Inneren des Spaltrohrtopfes fixiert bzw. gelagert.

Der Lagerhalter ist vorzugsweise relativ zu dem Lager so dimensioniert, dass das Lager im Inneren des Lagerhaltes kraftschlüssig fixiert ist. Das heißt, der Lagerhalter weist einen Innendurchmesser auf, welcher vorzugsweise geringfügig kleiner als der Außendurchmesser des Lagers ist, sodass es beim Einsetzen des Lagers zu einer Verformung des Lagerhalters kommt, welcher aufgrund elastischer Rückstellkräfte zu einer kraftschlüssigen Anlage des Lagerhalters am Außenumfang des Lagers führt.

Ferner ist der Lagerhalter vorzugsweise relativ zu dem Innenumfang des Spaltrohrtopfes so dimensioniert, dass der Lagerhalter im Inneren des Spaltrohrtopfes kraftschlüssig fixiert ist. Dazu weist der Lagerhalter, wenn er nicht in den Spaltrohrtopf eingesetzt ist, vorzugsweise einen Außendurchmesser auf, welcher geringfügig größer als der Innendurchmesser des Spaltrohrtopfes ist, sodass der Lagerhalter beim Einsetzten in den Spaltrohrtopf elastisch verformt wird und so kraftschlüssig an der Innenwandung des Spaltrohrtopfes fixiert wird. Die elastische Verformbarkeit des Lagerhalters zum kraftschlüssigen Fixieren des Lagers und/oder zum kraftschlüssigen Fixieren des Lagerhalters im Inneren des Spaltrohrtopfes kann durch einen Verformung der einzelnen, sich quer zum Innenumfang des Spaltrohrs erstreckenden Stege oder durch Verformung der Stege zueinander geschehen.

Der Lagerhalter ist besonders bevorzugt aus Blech geformt. Dabei kann die Formgebung insbesondere durch Tiefziehen erfolgen. So kann der Lagerhalter beispielsweise aus einem runden Blech gefertigt werden, indem zunächst durch Tiefziehen eine becherförmige Gestalt erzeugt wird. Anschließend kann in der Umfangswandung und gegebenenfalls der Stirnfläche dieser becherförmigen Gestalt eine wellenförmige Struktur ausgebildet werden, indem die Umfangswandung in radialer Richtung an mehreren Stellen nach innen und/oder außen eingedrückt wird. Im letzten Schritt kann dann schließlich der Boden bzw. ein Zentralbereich des Bodens aus dieser becherförmigen mit Einbuchtungen bzw. mit Wellen versehenen Struktur ausgestanzt werden. Auf diese Weise lässt sich ein solcher Lagerhalter aus Blech vollständig durch Umformung und Stanzen fertigen, ohne dass eine spanende oder thermische Bearbeitung erforderlich ist. Ferner kann der Lagerhalter so einstückig ausgebildet werden. So kann eine geschlossene Ringstruktur ohne Schweiß- oder Fügevorgänge erzeugt werden.

Besonders bevorzugt weist der Lagerhalter zumindest einen radial nach innen gerichteten axialen Anschlag auf, an welchem das Lager mit einem Axialende zur Anlage kommt. Dieser Anschlag ist vorzugsweise an der dem Boden des Spaltrohrtopfes zugewandten Seite des Lagerhalters ausgebildet und liegt seinerseits bevorzugt am Boden des Spaltrohrtopfes an. Dieser Anschlag fixiert das Lager in axialer Richtung und verhindert, dass das Lager in axialer Richtung aus dem Lagerhalter herausrutschen kann bzw. in axialer Richtung zu weit in den Lagerhalter eingeschoben wird.

Der radial nach innen gerichtete Anschlag wird weiter bevorzugt von einem sich radial nach innen erstreckenden umfänglichen Kragen gebildet. Ein solcher Kragen kann bei dem vorangehend beschriebenen Fertigungsverfahren mittels Tiefziehen leicht ausgebildet werden, indem der Boden der becherförmigen Struktur nicht vollständig entfernt wird, sondern nur ein Zentralbereich entfernt wird, sodass am Innenumfang des Lagerhalters ein ringförmiger Abschnitt des Bodens als umfänglicher Kragen erhalten bleibt.

Gemäß einer besonders bevorzugten Ausführungsform weist der Lagerhalter zumindest einen sich in axialer Richtung vollständig durch den Lagerhalter hindurch erstreckenden Kanal auf. Dieser Kanal ermöglicht es, dass zu förderndes Fluid, beispielsweise Wasser durch den Lagerhalter hindurchströmen kann und so die Rückseite des Lagers erreichen kann, sodass das Lager vollständig umspült wird. Dies ist vorteilhaft, da die Schmierung des Lagers üblicherweise durch die zu fördernde Flüssigkeit erfolgt. Ein solcher Kanal bzw. mehrer Kanäle können durch voneinander beabstandete Stege des Lagerhalters ausgebildet werden. Dabei bilden die Freiräume zwischen den Stegen derartige Kanäle. Die Freiräume erstrecken sich dazu von einem Axialende zum entgegengesetzten Axialende des Lagerhalters. Bei einer wellenförmigen oder zickzackförmigen Struktur des Lagerhalters werden die Kanäle durch die in radialer Richtung geformten Einbuchtungen, das heißt die von der wellen- bzw. zickzackförmigen Struktur aufgespannten freien Querschnittsflächen gebildet.

Weiter bevorzugt ist in dem Anschlag zumindest ein sich radial erstreckender Kanal ausgebildet, welcher an seinem radial äußeren Ende vorzugsweise mit einem sich in axialer Richtung durch den Lagerhalter erstreckenden Kanal verbunden ist. Dieser Kanal ermöglicht es, dass Flüssigkeit, welche durch den Lagerhalter oder umfänglich am Lagerhalter vorbei strömt, an der Rückseite des Lagerhalters radial nach innen zu dem Lager bzw. den Lagerflächen des Lagers hin strömen kann, um dort für die ausreichende Schmierung zu sorgen. Der Kanal im Anschlag bzw. die Kanäle im Anschlag liegen vorzugsweise an der dem Lager zugewandten Seite, können jedoch zusätzlich oder alternativ auch an der dem Boden des Spaltrohrtopfes zugewandten Seite gelegen sein. Vorzugsweise erstrecken sich die radial erstreckenden Kanäle als Verlängerungen der sich axial erstreckenden Kanäle. Bei Umformung eines zunächst becherförmig tiefgezogenen Bleches können derartige Kanäle durch Ein- oder Ausbuchtungen des Bleches, welche über den Umfang verteilt, bevorzugt gleichmäßig über den Umfang verteilt in dem Blech ausgebildet werden, geschaffen werden. Dabei wird auch das Bodenblech der becherförmigen Struktur entsprechend mit Ein- bzw. Ausbuchtungen versehen. Wenn dann der Zentralbereich des Bodenbleches ausgestanzt wird, verbleibt in dem umfänglichen Kragen eine wellenförmige oder gezackte Struktur, welche an den Oberflächen die sich radial erstreckenden Kanäle definiert.

Der Lagerhalter ist zweckmäßigerweise derart ausgestaltet und in dem Spaltrohrtopf angeordnet, dass das Lager axial beabstandet zu einem Boden des Spaltrohrtopfes positioniert ist. Dabei liegt vorzugsweise der Lagerhalter mit seinem axialen Stirnende, vorzugsweise mit der Außenseite seines sich radial nach innen erstreckenden Anschlags bzw. Kragens am Boden des Spaltrohrtopfes an. So hält der Lagerhalter das Lager in definiertem Abstand zum Boden des Spaltrohrtopfes. Wenn der radial nach innen gerichtete Kragen bzw. der Anschlag des Lagerhalters in der vorangehend beschriebenen Weise mit sich radial nach innen erstreckenden Kanälen beispielsweise durch eine wellenförmige Struktur des Kragens ausgebildet ist, wird so sichergestellt, dass Flüssigkeit zwischen dem Lager und dem Boden des Spaltrohres hindurchströmen kann und so das Lager rückseitig umströmen kann, um für die ausreichende Schmierung an den Lagerflächen zu sorgen.

Der Spaltrohrtopf kann in einem Axialbereich, in welchem ein Rotor angeordnet ist, das heißt in dem Axialbereich, in dem die magnetisch wirksamen Bestandteile des Rotors angeordnet sind, eine reduzierte Wandstärke aufweisen. Dadurch kann der magnetische Wirkungsgrad zwischen Stator und Rotor verbessert werden. Der Lagerhalter jedoch ist vorzugsweise in einem Axialbereich mit nicht reduzierter Wandstärke angeordnet. So wird im Bereich des Lagers eine ausreichende Stabilität des Spaltrohrtopfes zur Aufnahme der vom Lager übertragenen Kräfte geschaffen. Eine Ausdünnung der Wandung Spaltrohrtopfes kann beispielsweise durch Drücken oder Walzen erfolgen. Dabei wird das dem Boden des Spaltrohrtopfes zugewandte Axialende des Spaltrohrtopfes nicht bearbeitet, sodass dieser Bereich, in welchem dann der Lagerhalter mit dem Lager angeordnet wird, nicht ausgedünnt wird. Bis auf eine solche reduzierte Wandstärke durch Ausdünnen der Wandstärke weist der Spaltrohrtopf jedoch über seine gesamte axiale Länge vorzugsweise im Wesentlichen denselben Durchmesser auf.

Das erfindungsgemäße Pumpenaggregat ist besonders bevorzugt als ein Umwälzpumpenaggregat, insbesondere als ein Heizungsumwälzpumpenaggregat ausgebildet.

Nachfolgend wir die Erfindung beispielhaft anhand der beigefügten Figuren beschrieben. In diesen zeigt:
- Fig. 1: eine teilweise geschnittene perspektivische Gesamtansicht eines erfindungsgemäßen Pumpenaggregats,
- Fig. 2: eine teilweise geschnittene perspektivische Ansicht des Spaltrohrtopfes des Pumpenaggregats gemäß Fig. 1 von der dem Laufrad zugewandten Seite,
- Fig. 3: eine perspektivische teilweise geschnittene Ansicht des Spaltrohrtopfes gemäß Fig. 2 von der Rückseite her gesehen,
- Fig. 4: eine perspektivische Ansicht des Lagerhalters von der Rückseite her gesehen, und
- Fig. 5: eine perspektivische Gesamtansicht des Lagerhalters gemäß Fig. 4 von seiner Vorderseite gesehen.

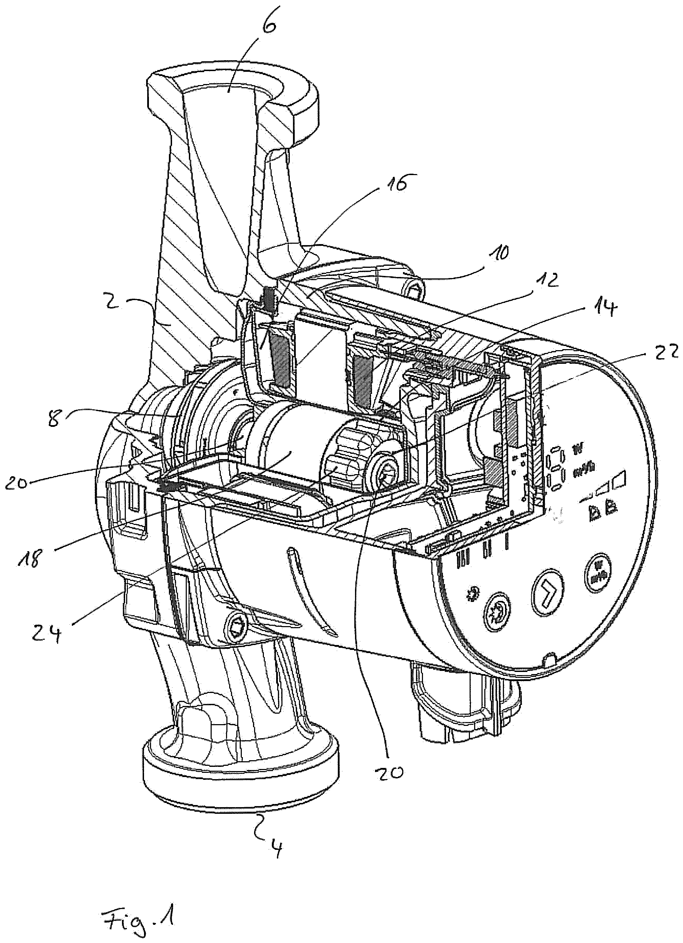

Das Pumpenaggregat gemäß Fig. 1 ist ein Heizungsumwälzpumpenaggregat, welches in bekannter Weise ein Pumpengehäuse 2 mit einem Saugstutzen 4 und einem Druckstutzen 6 aufweist. In dem Pumpengehäuse 2 ist ein Laufrad 8 angeordnet. An das Pumpengehäuse 2 angesetzt ist ein Statorgehäuse 10 mit einem darin angeordneten Stator 12 eines elektrischen Antriebsmotors. Der elektrische Antriebsmotor ist als Spaltrohrmotor ausgebildet. Das heißt im Inneren des Stators 12 ist ein Spaltrohrtopf 14 angeordnet, welcher über einen radial nach außen auskragenden Kragen 16 den Bereich des Statorgehäuses 10, in welchem der Stator 12 gelegen ist, zum Innenraum des Pumpengehäuses 2, in welchem sich das zu fördernde Fluid befindet, abdichtet. Im Inneren des Spaltrohrtopfes 14 ist ein Rotor 18 angeordnet, welcher über die Motorwelle 20 das Laufrad 8 drehend antreibt. Die Motorwelle 20 ist an ihrem dem Laufrad 8 abgewandten Axialende in einem Radiallager 22 gelagert. Das Radiallager 20 ist seinerseits in einem Lagerhalter 24 im Inneren des Spaltrohrtopfes 14 fixiert.

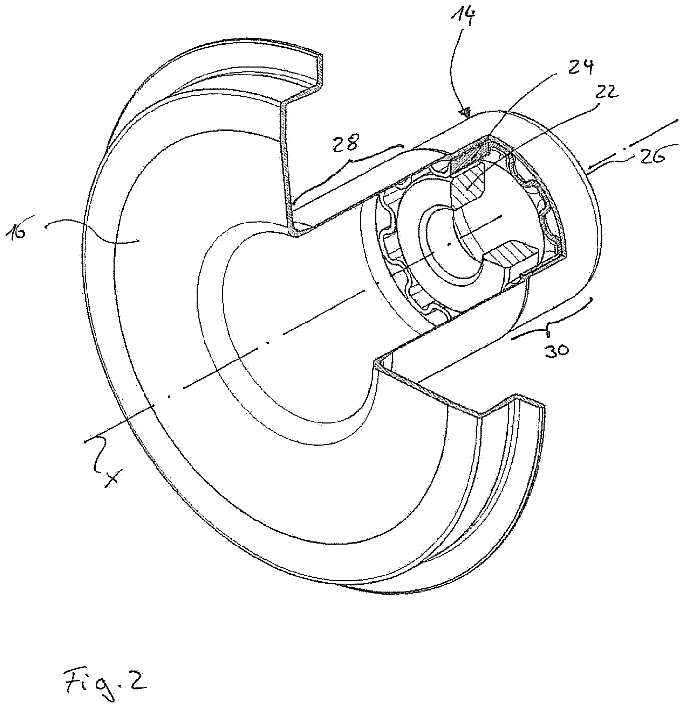

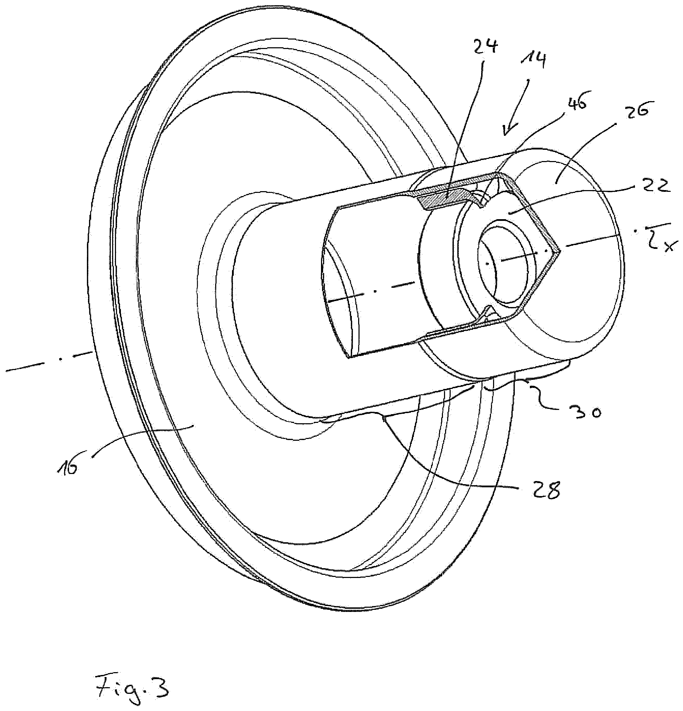

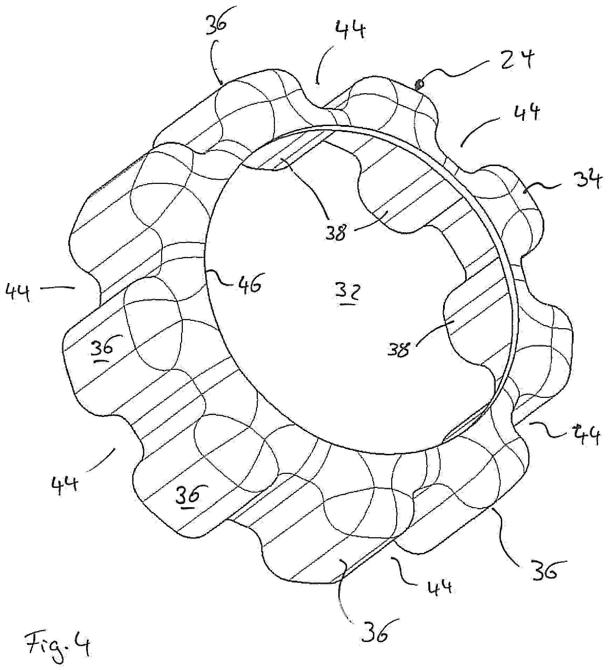

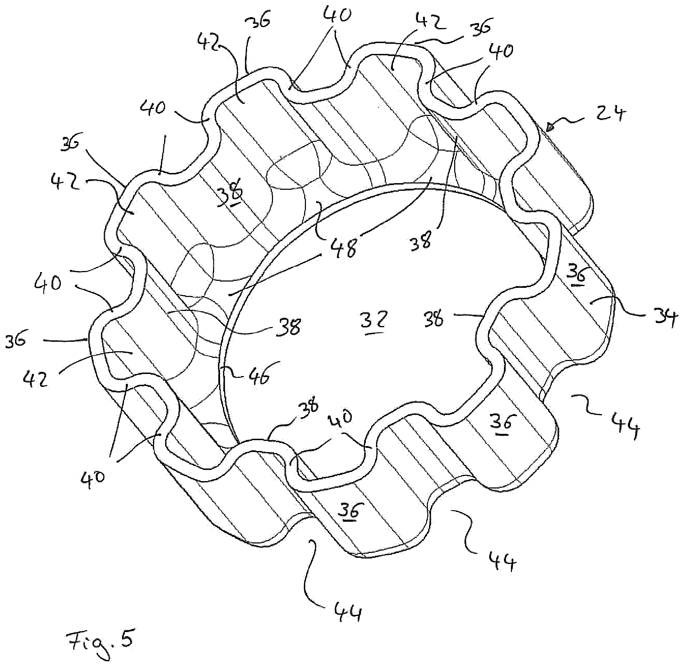

Die Ausgestaltung und Funktion des Lagerhalters 24 wird näher anhand der Fig. 2 bis 5 beschrieben. Der Spaltrohrtopf 14 weist an seinem offenen Ende den radial nach außen gerichteten Kragen 16 auf. An seinem entgegengesetzten Axialende ist der Spaltrohrtopf 14 durch einen Boden 26 verschlossen.

In dem sich an den Kragen 16 anschließenden Axialbereich 28 des Spaltrohrtopfes 14 ist dessen Wandung ausgedünnt bzw. mit reduzierter Dicke ausgebildet, um den Magnetfluss zwischen Stator 12 und Rotor 18 in diesem Bereich zu verbessern. In dem an den Boden 26 angrenzenden Axialbereich 30 des Spaltrohrtopfes 14 ist dessen Wandstärke nicht reduziert. In diesem Bereich ist der Lagerhalter 24 mit dem darin angeordneten Radiallager 22 angeordnet. Das Radiallager 22 ist vorzugsweise als Gleitlager, beispielsweise aus Keramik ausgebildet.

Der Lagerhalter 24 ist als ein Tiefziehteil aus Blech ausgebildet. Der Lagerhalter 24 hat eine topfförmige Grundform, wobei der Zentralbereich 32 des Bodens dieser topfförmigen Struktur vorzugsweise durch Stanzen entfernt ist, sodass ein offener Zentralbereich 32 gebildet wird. Die Umfangswandung 34 weist eine wellenförmige Struktur auf, wobei die radial außen liegenden Scheitelbereiche 36 am Innenumfang des Spaltrohrtopfes 14 kraftschlüssig zur Anlage kommen, während die radial innen liegenden Scheitelbereiche 38 der wellenförmigen Struktur der Umfangswandung 34 kraftschlüssig am Außenumfang des Radiallagers 22 zur Anlage kommen. So füllt die wellenförmig verlaufende Umfangswandung 34 den Freiraum zwischen dem Radiallager 22 und dem Innenumfang des Spaltrohrtopfes 14 aus und fixiert und zentriert das Radiallager 22 im Inneren des Spaltrohrtopfes 14. Zur Zentrierung der Innenumfangsfläche des Radiallagers 22, welche die Lagerfläche bildet, bezüglich der Längs- bzw. Drehachse X wird das Radiallager 22 vorzugsweise nach dem Einsetzen in den Spaltrohrtopf 14 geschliffen.

Die wellenförmige Struktur der Umfangswandung 34 wird dadurch erreicht, dass sich die radial außen liegenden Scheitelbereiche 36 und die radial innen liegenden Scheitelbereiche 38 regelmäßig über den Umfang verteilt abwechseln. Eine solche Struktur kann beispielsweise durch Umformen eines zuvor zylindrischen Topfes erreicht werden. Durch diese wellenförmige Struktur werden quer zum Innenumfang des Spaltrohrtopfes, das heißt im Wesentlichen radial zur Drehachse X gerichtete Stege 40 geschaffen, welche die Scheitelbereiche 36 und 38 miteinander verbinden. Die Stege 40 dienen der Zentrierung des Lagers 22 in dem Spaltrohrtopf 14 und zur Übertragung der Radialkräfte von dem Radiallager 22 auf die Umfangswandung des Spaltrohrtopfes 14.

Durch die wellenförmige Struktur werden zwischen den Stegen 40 Freiräume 42 am Innenumfang der Umfangswandung 34 des Lagerhalters 24 ausgebildet. Diese Freiräume 42 liegen somit radial innerhalb der Scheitelbereiche 36. Entsprechend werden dazwischenliegende Freiräume radial außerhalb der inneren Scheitelbereiche 38 an der Außenseite der Umfangswandung 34 gebildet. Diese Freiräume 42 und die Freiräume 44 am Außenumfang bilden sich axial über die gesamte Länge des Lagerhalters 24 erstreckende Kanäle, durch welche Flüssigkeit im Inneren des Spaltrohrtopfes 14 von der dem Pumpengehäuse 2 zugewandten Seite her durch den Lagerhalter 24 hindurch zur Rückseite des Radiallagers 22 strömen kann.

Ausgehend von der Umfangswandung 34 weist der Lagerhalter 24 an einem Axialende darüber hinaus einen radial nach innen gerichteten Kragen 46 auf. Dieser radial nach innen gerichtete Kragen 46 ist als ringförmiger Kragen ausgebildet. Der ringförmige Kragen 46 stellt den Außenbereich des Bodens der topfförmigen Struktur des Lagerhalters 24 dar, welcher nach Ausstanzen des Zentralbereiches 32 verbleibt. Der Kragen 46 dient als axialer Anschlag für das Radiallager 22, wenn dieses von der offenen, das heißt dem Kragen 46 abgewandten Axialseite her in den Lagerhalter 24 eingeschoben bzw. eingepresst wird. Darüber hinaus kann der Kragen 46 mit seiner Außenseite im Inneren des Spaltrohrtopfes 14 am Boden 26 zur Anlage kommen. So hält der Kragen 46 dann das Radiallager 22 im Abstand zum Boden 46. Die als Kanäle wirkenden Freiräume 42 am Innenumfang der Umfangswandung 34 des Lagerhalters 24 münden an der Innenseite des Kragens 46 in sich radial nach innen erstreckenden Kanälen 48. Auf diese Weise wird Flüssigkeit, welche durch die Freiräume 42 in axiale Richtung strömt, über die Kanäle 48 am Kragen 46 radial nach innen gerichtet, sodass das Radiallager 22 rückseitig umströmt wird.

Insgesamt ist zu erkennen, dass durch den als Tiefziehteil aus Blech ausgebildeten Lagerhalter 24 eine sehr einfache Fixierung des Radiallagers 22 im Inneren des Spaltrohrtopfes 14 möglich wird und gleichzeitig die Umströmung des Radiallagers 22 mit Flüssigkeit sichergestellt wird. Der Lagerhalter 24 ist so dimensioniert, dass sein Außendurchmesser im Bereich der äußeren Scheitelbereiche 36 geringfügig größer als der Innendurchmesser des Spaltrohrtopfes 14 ist. So kann der Lagerhalter 24 in das Innere des Spaltrohrtopfes 14 eingepresst und in dem Axialbereich 30 kraftschlüssig gehalten werden. Gleichzeitig ist der Innendurchmesser im Bereich der inneren Scheitelbereiche 38 des Lagerhalters 24 vorzugsweise geringfügig kleiner als der Außendurchmesser des Radiallagers 22, sodass das Radiallager 22 in das Innere des Lagerhalters 24 eingepresst und dort kraftschlüssig fixiert werden kann.

### Bezugszeichenliste

- 2: - Pumpengehäuse
- 4: - Saugstutzen
- 6: - Druckstutzen
- 8: - Laufrad
- 10: - Statorgehäuse
- 12: - Stator
- 14: - Spaltrohrtopf
- 16: - Kragen
- 18: - Rotor
- 20: - Motorwelle
- 22: - Radiallager
- 24: - Lagerhalter
- 26: - Boden
- 28: - Axialbereich
- 30: - Axialbereich
- 32: - Zentralbereich
- 34: - Umfangswandung
- 36, 38: - Scheitelbereiche
- 40: - Stege
- 42, 44: - Freiräume
- 46: - Kragen
- 48: - Kanäle

- X: - Längs- bzw. Drehachse

## Patentansprüche

1. Pumpenaggregat mit einem als Spaltrohrmotor ausgebildeten elektrischen Antriebsmotor, welcher im Inneren eines Spaltrohrtopfes (14) ein Lager (22) aufweist, in welchem eine Motorwelle (20) gelagert ist,
**dadurch gekennzeichnet, dass**
das Lager (22) einen Außendurchmesser aufweist, welcher kleiner als der Innendurchmesser des Spaltrohrtopfes (14) ist, und das Lager (22) im Inneren des Spaltrohrtopfes (14) in einem Lagerhalter (24) gelagert ist, welcher mehrere sich quer zum Innenumfang des Spaltrohrtopfes (14) erstreckende Stege (40) aufweist und den Freiraum zwischen Außendurchmesser des Lagers (22) und Innendurchmesser des Spaltrohrtopfes (14) füllt und das Lager (22) zentriert im Spaltrohrtopf (14) fixiert.

2. Pumpenaggregat nach Anspruch 1, **dadurch gekennzeichnet, dass** der Spaltrohrtopf (14) aus Metall, insbesondere aus rostfreiem Stahl ausgebildet ist.

3. Pumpenaggregat nach Anspruch 1 oder 2, **dadurch gekennzeichnet, dass** die Stege (40) aus einem Flachmaterial, insbesondere einem Blech ausgebildet sind, welches eine Wandstärke aufweist, die geringer ist als der radiale Abstand zwischen dem Außenumfang des Lagers (22) und dem Innenumfang des Spaltrohrtopfes (14).

4. Pumpenaggregat nach einem der vorangehenden Ansprüche, **dadurch gekennzeichnet, dass** mehrere Stege (40) einstückig von einem in Umfangsrichtung wellen- und/oder zickzackförmig verlaufend geformten Flachmaterial gebildet sind.

5. Pumpenaggregat nach Anspruch 4, **dadurch gekennzeichnet, dass** Flachmaterial sich über den gesamten Umfang, vorzugsweise als geschlossener Ring erstreckt.

6. Pumpenaggregat nach einem der vorangehenden Ansprüche, **dadurch gekennzeichnet, dass** der Lagerhalter (24) relativ zu dem Lager (22) so dimensioniert ist, dass das Lager (22) im Inneren des Lagerhalters (24) kraftschlüssig fixiert ist.

7. Pumpenaggregat nach einem der vorangehenden Ansprüche, **dadurch gekennzeichnet, dass** der Lagerhalter (24) relativ zu dem Innendurchmesser des Spaltrohrtopfes (14) so dimensioniert ist, dass der Lagerhalter (24) im Inneren des Spaltrohrtopfes (14) kraftschlüssig fixiert ist.

8. Pumpenaggregat nach einem der vorangehenden Ansprüche, **dadurch gekennzeichnet, dass** der Lagerhalter (24) aus Blech, insbesondere durch Tiefziehen geformt ist.

9. Pumpenaggregat nach einem der vorangehenden Ansprüche, **dadurch gekennzeichnet, dass** der Lagerhalter (24) zumindest einen radial nach innen gerichteten axialen Anschlag (46) aufweist, an welchem das Lager (22) mit einer Axialseite zur Anlage kommt.

10. Pumpenaggregat nach Anspruch 9, **dadurch gekennzeichnet, dass** der zumindest eine Anschlag von einem sich radial nach innen erstreckenden umfänglichen Kragen (46) gebildet wird.

11. Pumpenaggregat nach einem der vorangehenden Ansprüche, **dadurch gekennzeichnet, dass** der Lagerhalter (24) zumindest einen sich in axialer Richtung (X) vollständig durch den Lagerhalter (24) hindurch erstreckenden Kanal (42) aufweist.

12. Pumpenaggregat nach Anspruch 11, **dadurch gekennzeichnet, dass** mehrere sich in axialer Richtung (X) durch den Lagerhalter (24) hindurch erstreckende Kanäle durch Freiräume (42) zwischen den Stegen (40) des Lagerhalters (24) gebildet sind.

13. Pumpenaggregat nach Anspruch 9 oder 10, **dadurch gekennzeichnet, dass** in dem Anschlag (46) zumindest ein sich radial erstreckender Kanal (48) ausgebildet ist, welcher an seinem radial äußeren Ende vorzugsweise mit einem sich in axialer Richtung (X) durch den Lagerhalter (24) erstreckenden Kanal (42) verbunden ist.

14. Pumpenaggregat nach einem der vorangehenden Ansprüche, **dadurch gekennzeichnet, dass** der Lagerhalter (24) derart ausgestaltet und in dem Spaltrohrtopf (14) angeordnet ist, dass das Lager (22) axial beabstandet zu einem Boden (26) des Spaltrohrtopfes (14) positioniert ist.

15. Pumpenaggregat nach einem der vorangehenden Ansprüche, **dadurch gekennzeichnet, dass** der Spaltrohrtopf (14) über seine gesamte Länge einen im Wesentlichen konstanten Durchmesser aufweist.

16. Pumpenaggregat nach einem der vorangehenden Ansprüche, **dadurch gekennzeichnet, dass** der Spaltrohrtopf (14) in einem Axialbereich (28), in welchem ein Rotor (18) angeordnet ist, eine reduzierte Wandstärke aufweist und der Lagerhalter (24) in einem Axialbereich (30) mit nicht reduzierter Wandstärke angeordnet ist.

17. Pumpenaggregat nach einem der vorangehenden Ansprüche, **dadurch gekennzeichnet, dass** es als ein Umwälzpumpenaggregat, insbesondere ein Heizungsumwälzpumpenaggregat ausgebildet ist.

## Claims

1. A pump assembly with an electric drive motor which is designed as a canned motor and which in the inside of a can pot (14) comprises a bearing (22), in which a motor shaft (20) is mounted, **characterised in that**
the bearing (22) has an outer diameter which is smaller than the inner diameter of the can pot (14), and the bearing (22) is mounted in the inside of the can pot (14) in a bearing holder (24) which comprises several webs (40) extending transversely to the inner periphery of the can pot (14), fills the free space between the outer diameter of the bearing (22) and the inner diameter of the can pot (14) and fixes the bearing (22) in the can pot (14) in a centred manner.

2. A pump assembly according to claim 1, **characterised in that** the can pot (14) is designed of metal, in particular of a rust-free steel.

3. A pump assembly according to claim 1 or 2, **characterised in that** the webs (14) are formed from a flat material, in particular of a sheet metal, which has a wall thickness which is smaller than the radial distance between the outer periphery of the bearing (22) and the inner periphery of the can pot (14).

4. A pump assembly according to one of the preceding claims, **characterised in that** several webs (40) are formed as one piece from a flat material which in the peripheral direction is shaped running in a wave-like and/or zigzag manner.

5. A pump assembly according to claim 4, **characterised in that** the flat material extends over the whole periphery, preferably as a closed ring.

6. A pump assembly according to one of the preceding claims, **characterised in that** the bearing holder (24) is dimensioned relative to the bearing (22) such that the bearing (22) is fixed with a non-positive fit in the inside of the bearing holder (24).

7. A pump assembly according to one of the preceding claims, **characterised in that** the bearing holder (24) is dimensioned relative to the inner diameter of the can pot (14) such that the bearing holder (24) is non-positively fixed in the inside of the can pot (14).

8. A pump assembly according to one of the preceding claims, **characterised in that** the bearing holder (24) is formed from sheet metal, in particular by way of deep drawing.

9. A pump assembly according to one of the preceding claims, **characterised in that** the bearing holder (24) comprises at least one radially inwardly directed axial abutment (46), on which the bearing (22) comes into contact with an axial side.

10. A pump assembly according to claim 9, **characterised in that** the at least one abutment is formed by a radially inwardly extending, peripheral collar (46).

11. A pump assembly according to one of the preceding claims, **characterised in that** the bearing holder (24) comprises at least one channel (42) extending in the axial direction (X) completely through the bearing holder (24).

12. A pump assembly according to claim 11, **characterised in that** several channels extending in the axial direction (X) through the bearing holder (24) are formed by free spaces (42) between the webs (40) of the bearing holder (24).

13. A pump assembly according to claim 9 or 10, **characterised in that** at least one radially extending channel (48) is formed in the abutment (46), said at least one channel at its radially outer end being connected preferably to a channel (42) extending in the axial direction (X) through the bearing holder (24).

14. A pump assembly according to one of the preceding claims, **characterised in that** the bearing holder (24) is designed and arranged in the can pot (14), in a manner such that the bearing (22) is positioned axially distanced to a base (26) of the can pot (14).

15. A pump assembly according to one of the preceding claims, **characterised in that** the can pot (14) has an essentially constant diameter over its whole length.

16. A pump assembly according to one of the preceding claims, **characterised in that** the can pot (14) in an axial region (28), in which a rotor (18) is arranged, has a reduced wall thickness and the bearing holder (14) is arranged in an axial region (30) with a wall thickness which is not reduced.

17. A pump assembly according to one of the preceding claims, **characterised in that** it is designed as a circulation pump assembly, in particular a heating circulation pump assembly.

## Revendications

1. Groupe motopompe avec un moteur d'entraînement électrique de type moteur à gaine qui comprend à l'intérieur d'une gaine en forme de pot (14) un palier (22) dans lequel est monté l'axe de moteur (20),
**caractérisé en ce que** le palier (22) présente un diamètre extérieur qui est inférieur au diamètre intérieur de la gaine en forme de pot (14) et que le palier (22) est monté à l'intérieur de la gaine en forme de pot (14) dans un support de palier (24) qui comporte plusieurs entretoises (40) s'étendant transversalement à la circonférence intérieure de la gaine en forme de pot (14) et qui remplit l'espace libre entre le diamètre extérieur du palier (22) et le diamètre intérieur de la gaine en forme de pot (14) et qui fixe le palier (22) de manière centrée dans la gaine en forme de pot (14).

2. Groupe motopompe selon la revendication 1, **caractérisé en ce que** la gaine en forme de pot (14) est réalisée en métal, notamment en acier inoxydable.

3. Groupe motopompe selon la revendication 1 ou 2, **caractérisé en ce que** les entretoises (40) sont réalisées en un matériau plat, notamment en une tôle, qui présente une épaisseur de paroi qui est inférieure à la distance radiale entre la circonférence extérieure du palier (22) et la circonférence intérieure de la gaine en forme de pot (14).

4. Groupe motopompe selon l'une des revendications précédentes, **caractérisé en ce que** plusieurs entretoises (40) sont formées en une seule pièce par un matériau plat s'étendant dans la direction circonférentielle sous la forme d'ondes et/ou en zigzag.

5. Groupe motopompe selon la revendication 4, **caractérisé en ce que** le matériau plat s'étend sur la circonférence entière, de préférence sous la forme d'un anneau fermé.

6. Groupe motopompe selon l'une des revendications précédentes, **caractérisé en ce que** le support de palier (24) présente des dimensions telles par rapport au palier (22) que le palier (22) soit solidaire en effort à l'intérieur du support de palier (24).

7. Groupe motopompe selon l'une des revendications précédentes, **caractérisé en ce que** le support de palier (24) présente des dimensions telles par rapport au diamètre intérieur de la gaine en forme de pot (14) que le support de palier (24) soit solidaire en effort à l'intérieur de la gaine en forme de pot (14).

8. Groupe motopompe selon l'une des revendications précédentes, **caractérisé en ce que** le support de palier (24) est réalisé en une tôle, qu'il est formé notamment par emboutissage.

9. Groupe motopompe selon l'une des revendications précédentes, **caractérisé en ce que** le support de palier (24) comprend au moins une butée axiale (46) orientée radialement vers l'intérieur à laquelle le palier (22) est adjacent par un côté axial.

10. Groupe motopompe selon la revendication 9, **caractérisé en ce que** ladite au moins une butée est formée par un collet circonférentiel (46) s'étendant radialement vers l'intérieur.

11. Groupe motopompe selon l'une des revendications précédentes, **caractérisé en ce que** le support de palier (24) comprend au moins un canal (42) s'étendant en direction axiale (X) entièrement à travers le support de palier (24).

12. Groupe motopompe selon la revendication 11, **caractérisé en ce que** plusieurs canaux s'étendant en direction axiale (X) entièrement à travers le support de palier (24) sont formés par des espaces libres (42) entre les entretoises (40) du support de palier (24).

13. Groupe motopompe selon la revendication 9 ou 10, **caractérisé en ce qu'**il est formé, dans la butée (46), au moins un canal (48) s'étendant radialement qui est relié à son extrémité radialement extérieure de préférence à un canal (42) s'étendant en direction axiale (X) à travers le support de palier (24).

14. Groupe motopompe selon l'une des revendications précédentes, **caractérisé en ce que** le support de palier (24) est conformé et disposé dans la gaine en forme de pot (14) de telle façon que le palier (22) soit positionné axialement espacé par rapport à un fond (26) de la gaine en forme de pot (14).

15. Groupe motopompe selon l'une des revendications précédentes, **caractérisé en ce que** la gaine en forme de pot (14) présente un diamètre sensiblement constant sur toute sa longueur.

16. Groupe motopompe selon l'une des revendications précédentes, **caractérisé en ce que** la gaine en forme de pot (14) présente, dans une zone axiale (28) dans laquelle est disposé un rotor (18), une épaisseur de paroi réduite et que le support de palier (24) est disposé dans une zone axiale (30) ayant une épaisseur de paroi non réduite.

17. Groupe motopompe selon l'une des revendications précédentes, **caractérisé en ce qu'**il est conformé comme groupe motopompe de circulation, notamment de groupe motopompe de circulation de chauffage.
